# EUROPÄISCHE PATENTSCHRIFT

(11) **EP 3 648 273 B1**
(45) Veröffentlichungstag und Bekanntmachung des Hinweises auf die Patenterteilung: **14.04.2021**
(21) Anmeldenummer: 18203049.4
(22) Anmeldetag: 29.10.2018
(51) Int. Cl.: H02G 3/12

(54) **ELEKTROINSTALLATIONSGERÄT MIT KRALLE**
ELECTRICAL INSTALLATION APPARATUS COMPRISING A CLAW
UNITÉ D'INSTALLATION ÉLECTRIQUE À GRIFFES

(43) Veröffentlichungstag der Anmeldung: 06.05.2020
(73) Patentinhaber: GIRA GIERSIEPEN GmbH & Co. KG, 42477 Radevormwald (DE)
(72) Erfinder: STREHLE, Ronny, 42499 Hückeswagen (DE)
(74) Vertreter: Patent- und Rechtsanwälte Dr. Solf & Zapf

(56) Entgegenhaltungen:
- DE-A1- 1 790 297
- DE-A1-102010 036 880
- DE-B3-102011 050 262
- Busch-Jaeger Elektro Gmbh: "Busch-Jaeger 2149 Verlängerungsspreize: Amazon.de: Baumarkt", , 21. März 2007 (2007-03-21), XP055567892, Gefunden im Internet: URL:https://www.amazon.de/Busch-Jaeger-214 9-Verlängerungsspreize/dp/B000WVE6PC/ref=p d_rhf_se_p_img_3?_encoding=UTF8&psc=1&refR ID=MYJ8QTP035B545XFBX5J [gefunden am 2019-03-12]

## Beschreibung

Die Erfindung betrifft ein Elektroinstallationsgerät, wie Steckdose, Schalter, Taster, mit einem Tragring, der zumindest eine Aufnahme zur Lagerung einer Kralle mittels einer Schraube aufweist, wobei die Schraube einen Schraubenkopf und ein Gewinde aufweist und ein Einsteckbereich zur Lagerung der Kralle ausgebildet ist, wobei die Kralle eine L-förmige Ausgestaltung mit zwei über einen Knickbereich verbundenen Schenkeln aufweist, und am freien Ende eines ersten Schenkels mindestens eine Spitze ausgebildet ist, und der zweite Schenkel in vom Knickbereich abgewandter Richtung bis zu einem freien Ende des zweiten Schenkels gabelförmig mit zwei beabstandeten Zinken ausgebildet ist, wobei ein zwischen den Zinken verlaufender Spalt derart ausgebildet ist, dass am freien Ende des zweiten Schenkels ein erster Abschnitt ausgebildet ist und sich in einem in Richtung des Knickbereichs an den ersten Abschnitt anschließenden zweiten Abschnitt der Spalt erweitert und größer oder gleich dem Durchmesser des Einsteckbereichs der Schraube und kleiner als der Durchmesser des Schraubenkopfes ist, wobei in dem zweiten Abschnitt der Einsteckbereich der Schraube angeordnet ist. Zudem betrifft die Erfindung ein Verfahren zur Herstellung eines solchen Elektroinstallationsgerätes.

In der DE 4032142 A1 ist eine Elektroinstallationsgerät mit Kralle offenbart, wobei die Kralle mit einer Schraube verstellt wird. Vom Knickbereich der Kralle bis zum Eingreifbereich mit der Schraube sind zwei federelastische, zueinander beabstandete Arme angeordnet, in die die Schraube eingedrückt werden kann.

Nachteilig bei dieser Entwicklung ist die Federelastizität der Arme. Bei der Verstellung der Kralle muss die Schraube fester angezogen werden, damit auch nach Alterung der Materialien die Krallen eine feste Halterung bewirken. Weiterhin ist durch die fehlende Stabilisierung im Knickbereich in Kombination mit dem starken Anziehen der Schraube eine Überdehnung der Arme bis zum Abbruch möglich, so dass die Kralle nicht mehr ihre Funktion erfüllt.

Aus der DE 10 2010 036 880 A1 ist ein Elektroinstallationsgerät mit einer Spreizkralle bekannt, welche mittels einer Spreizschraube in einer Tasche eines Trägers angeordnet wird. Die Spreizkralle weist dabei einen Schlitz auf und wird senkrecht zu einer Schraubrichtung der Schraube auf die Schraube aufgeschoben. Hierbei ist die Schraube mit einem glatten gewindefreien Abschnitt und einem im Durchmesser erweiterten Gewindeabschnitt innerhalb des Schlitzes angeordnet. Damit die Spreizkralle nicht verklemmt und sich zur Schraubrichtung verschwenken kann, weist der Schlitz eine Breite zumindest gleich groß oder größer als der im Durchmesser vergrößerte Gewindeabschnitt der Spreizschraube auf. Damit die Spreizkralle nicht aus der Aufnahme herausgleiten kann, ist wippenartig verschwenkbar an einer Basis einer Spreizkralle ein Sperrglied angeordnet.

Nachteilig bei dieser Ausführung ist, dass die Spreizkralle beim Herausschrauben der Spreizschraube der Längsbewegung der Spreizschraube nicht folgt und es daher zu einem Verhaken der Spreizkralle kommt, wodurch diese nicht mehr in eine "Parkposition" übergeht, welche die Demontage des Elektroinstallationsgerät ermöglicht. Zudem wird das Sperrglied durch ein Freistanzen aus der Basis erzeugt. Das verringert die Stabilität und begünstigt die Anfälligkeit für Verdrehungen bis hin zum Versagen des Bauteils.

In der DE 17 90 297 A1 wird eine aus einer starren Spreizkralle, einer Befestigungsschraube und einer Mutter bestehende Befestigungsvorrichtung für ein Einbauaggregat offenbart. Die starre Spreizkralle kann dabei in das Einbauaggregat über eine an der seitlichen Wandung des Einbauaggregates vorgesehene Ausnehmung eingeführt werden. Weiterhin kann alternativ zu der Kombination aus der starren Spreizkralle in Verbindung mit einer Befestigungsschraube auch eine elastische Spreizkralle in Verbindung mit einem Montageschieber verwendet werden.

Aus der DE 10 2011 050262 B3 ist ein Elektroinstallationsgerät mit einer Spreizkralle bekannt, bei der die Spreizkralle einen Bedienschenkel und einen Basisschenkel aufweist, wobei beide Schenkel über einen Eckbereich mit einer als Einprägung ausgebildetn Versteifung verbunden sind. Die Versteifung dient dabei für eine verbesserte Stabilität.

Nachteilig bei diesem Elektroinstallationsgerät ist der komplexe Aufbau, welcher ein Langloch in der Spreizkralle und eine Rückstellfeder zum Erreichen der Demontageposition vorsieht. Der komplexe Aufbau erfordert daher insbesondere eine aufwändigere Montage und aufwändigere Bauteile.

In der EP 2 124 308 B1 wird eine Kralle mit formverstärktem Knickbereich und formverstärkten Spitzen beschrieben, die ein offenes Langloch als Eingriff für die Schraube aufweist.

Nachteilig bei dieser Ausführung ist, dass für die Kralle eine zusätzliche Einrichtung zur Positionierungshilfe notwendig ist, damit die Kralle immer im Eingriffsbereich der Schraube bleibt. Die Positionierungshilfe braucht ein entsprechendes Gegenstück in der Aufnahme der Kralle, so dass die Montage nicht so einfach ist. Weiterhin wird mehr Material aufgrund der Verstärkung benötigt. Weiterhin ist diese Kralle nicht stapelbar.

Der Erfindung liegt die Aufgabe zugrunde, die oben genannten Nachteile zu überwinden, insbesondere die Stabilität der Kralle zu verbessern und gleichzeitig eine einfache Herstellung des Elektroinstallationsgerätes zu ermöglichen.

Die Aufgabe wird erfindungsgemäß durch ein Elektroinstallationsgerät mit den Merkmalen des kennzeichnenden Teils des Anspruchs 1 gelöst. Dadurch, dass die Schraube zwischen dem Schraubenkopf und dem Gewinde einen Vorsprung aufweist, wobei zwischen Schraubenkopf und Vorsprung der Einsteckbereich zur Lagerung der Kralle ausgebildet ist, wobei die Breite des ersten Abschnitts des Spalts kleiner als der Durchmesser des Einsteckbereichs der Schraube ist und der Spalt in dem zweiten Abschnitt kleiner als der Durchmesser des Vorsprungs der Schraube ist und in Richtung des Knickbereichs an den zweiten Abschnitt des Spalts anschließend ein vollflächiger Stützabschnitt des zweiten Schenkels aus Vollmaterial angeordnet ist, der den zweiten Abschnitt des Spalts mit dem Knickbereich verbindet, wobei das Material der Kralle plastisch verformbar ist, wird die Stabilität der Kralle gegen Biegekräfte verbessert. Insbesondere wird eine elastische Verformbarkeit bei einem Zusammendrücken der beiden Schenkel reduziert, was sich positiv auf eine plastische Verformbarkeit bei einem Zusammendrücken der beiden Schenkel auswirkt. Der Stützabschnitt aus Vollmaterial bewirkt eine Grundstabilität im Knickbereich und an dem angrenzenden Abschnitt. Damit ist die Kralle nicht so leicht brechbar.

Erfindungsgemäß ist das Material der Kralle plastisch verformbar. Das Material bewirkt eine stabilere Umformung. Der Knickbereich ist stabiler und federt nicht nach. Beim Anziehen der Schrauben reagiert die Kralle und gibt damit sofort eine Rückmeldung, mit welcher Kraft angezogen wurde. Bei federelastischem Material biegt sich dieses beim Anziehen durch, wodurch die Rückmeldung der Anzugskraft nicht direkt kommt, sondern erst nach Überspannen des federelastischen Materials. Das erhöht das Risiko, dass ein Materialbruch aufgrund des Überspannens möglich ist. Weiterhin bewirkt das plastisch verformbare Material, dass bei Bewegung der Schraube sich der Spalt im ersten Abschnitt nicht öffnet. Damit kommt es nicht zu einem Herausrutschen der Kralle aus dem Einsteckbereich der Schraube. Damit ist das Blockieren der Schraube reduziert.

In einer vorteilhaften Ausführungsform der Erfindung weist der Knickbereich eine die beiden Schenkel verbindende Einprägung in Form eines plastisch deformierten Materialbereichs auf. Die Deformation des Materialbereichs kann durch Druckbelastung des Materials erfolgen. Hierbei wird das Material gegengelagert, wobei bevorzugt im Bereich der Deformation keine Gegenlagerung erfolgt, damit der Bereich sich in die Druckrichtung verformen kann. Das dient der Stabilisierung des Knickbereiches, da die durch die Deformation des Materialbereichs gebildete Kante höhere Kräfte aufnehmen kann. Die Deformation wird durch das plastisch verformbare Material begünstigt. Bei federndem Material wären höhere Kräfte notwendig, womit federndes Material dafür nicht geeignet ist.

In einer weiteren vorteilhaften Ausführungsform der Erfindung erstreckt sich die Einprägung in den ersten Schenkel in Richtung der Spitze. Diese Einprägung stabilisiert ebenfalls die Kralle in Richtung Spitze, so dass die Hebelkraft besser auf die Spitze übertragen werden kann.

In einer bevorzugten Ausführungsform der Erfindung erstreckt sich die Einprägung bis in den Stützbereich und/oder den zweiten Abschnitt des zweiten Schenkels. Damit wird der zweite Abschnitt des zweiten Schenkels stabilisiert. Dieser Schenkel weist den Eingriff des Schenkels in den Einsteckbereich der Schraube auf. Die Schraube ist damit für die Stellung der Kralle ursächlich. Indem die Deformation des Materialbereichs bis in den zweiten Abschnitt reicht, können die durch die Schraube auf die Kralle übertragenen Kräfte besser auf die Spitze geleitet werden, die dann die Verankerung des Elektroinstallationsgerät in der Einbaudose z.B. in einer Unterputzdose vornimmt.

In einer vorteilhaften Ausführungsform der Erfindung liegt der Abstand der Zinken in dem ersten Abschnitt zum Abstand der Zinken im zweiten Abschnitt in einem Bereich von 50 bis 80%, bevorzugt von 60 bis 70%. Damit ist sichergestellt, dass die Kralle im Einsteckbereich der Schraube verbleibt. Der erste Abschnitt ist so weit verformt, dass der Einsteckbereich der Schraube den ersten Abschnitt nicht passieren kann, und dass es zu keiner durch die Schraube bewirkten Rückverformung des ersten Abschnitts kommt.

In einer vorteilhaften Ausführungsform der Erfindung ist die Länge des Stützabschnitts größer oder gleich der Länge des zweiten Abschnitts des Spalts. Damit kann die Kralle mit einer höheren Kraft durch die Schraube ausgelenkt werden, als wenn die Länge des Stützabschnitts kleiner als der zweite Abschnitt wäre.

In einer vorteilhaften Ausführungsform der Erfindung sind beide Schenkel der Kralle in einem Winkel von 60 bis 160°, bevorzugt 80 bis 125° zueinander angeordnet. Damit ist ein verbesserter Einbau und Ausbau des Elektroinstallationsgerätes möglich. Bei Winkeln unter 90° ist die Kralle durch das Ausdrehen der Schraube so weit einziehbar, dass die Spitze der Kralle beim Einsetzen in die Fassung nicht heraussteht, was ein Vorteil bei passgenauen Fassungen darstellt. Bei Winkeln über 90° steht zwar die Spitze heraus, jedoch ist mit weniger Umdrehungen der Schraube die Kralle schneller in der Fassung arretierbar. Das ist insbesondere vorteilhaft bei etwas größer ausgebildeten Fassungen.

Zudem wird die Aufgabe erfindungsgemäß durch ein Verfahren zur Herstellung eines solchen Elektroinstallationsgerätes gemäß den Merkmalen des kennzeichnenden Teils des Anspruchs 8 gelöst. Dabei wird das Elektroinstallationsgerät mittels folgender Schritte hergestellt:
a) Bereitstellung eines Tragrings mit einer Aufnahme zur Lagerung einer Kralle mittels einer Schraube,
b) Bereitstellung einer Kralle, wobei die Kralle eine L-förmige Ausgestaltung mit zwei über einen Knickbereich verbundenen Schenkeln aufweist, und am freien Ende eines ersten Schenkels mindestens eine Spitze ausgebildet ist, und der zweite Schenkel in vom Knickbereich abgewandter Richtung bis zu einem freien Ende des zweiten Schenkels gabelförmig mit zwei beabstandeten Zinken ausgebildet ist, wobei ein zwischen den Zinken verlaufender Spalt derart ausgebildet ist, dass am freien Ende des zweiten Schenkels ein erster Abschnitt ausgebildet ist, dessen Breite größer als der Durchmesser des Einsteckbereichs der Schraube ist, und sich in einem in Richtung des Knickbereichs an den ersten Abschnitt anschließenden zweiten Abschnitt der Spalt erweitert und größer oder gleich dem Durchmesser des Einsteckbereichs der Schraube und kleiner als der Durchmesser des Vorsprungs der Schraube und kleiner als der Durchmesser des Schraubenkopfes ist, wobei das Material der Kralle plastisch verformbar ist,
c) Bereitstellung einer Schraube, wobei die Schraube zwischen einem Schraubenkopf und einem Gewinde einen Vorsprung aufweist, wobei zwischen Schraubenkopf und Vorsprung ein Einsteckbereich zur Lagerung der Kralle ausgebildet ist,
d) Eindrehen der Schraube in ein Gewinde in der Aufnahme des Tragrings,
e) Einstecken des zweiten Schenkels der Kralle in die Aufnahme des Tragrings und auf den Einsteckbereich der Schraube, wobei der Einsteckbereich durch den ersten Abschnitt des Spalts bis in den zweiten Abschnitt des Spalts eingeführt wird,
f) plastische Verformung des ersten Abschnitts, so dass der Spalt des ersten Abschnitts kleiner als der Durchmesser des Einsteckbereichs der Schraube ist.

Man hat damit die Möglichkeit, nach Einführung der Kralle in die Aufnahme des Tragrings und Einstecken der Kralle in den Einsteckbereich der Schraube die plastische Verformung des ersten Abschnitts durchzuführen, so dass die Kralle an der Schraube fixiert ist und nicht mehr herausfallen kann. Anschließend kann die Kralle mittels der Schraube eingestellt werden. Die Kralle wird auf besonders einfache Weise montiert und permanent an der Schraube fixiert, wobei die Kralle eine hohe Stabilität aufweist.

Weitere vorteilhafte Ausgestaltungen der Erfindung ergeben sich aus der folgenden Figurenbeschreibung und den abhängigen Unteransprüchen.

Es zeigen:
- Fig. 1: eine dreidimensionale Ansicht eines Tragrings mit Schraube und Kralle im nicht zusammengesetzten Zustand des Elektroinstallationsgerätes,
- Fig. 2: eine dreidimensionale Ansicht eines Tragrings mit Schraube und Kralle im zusammengesetzten Zustand des Elektroinstallationsgerätes,
- Fig. 3a: eine Ansicht einer Kralle nach einer plastischen Verformung der Zinken, und
- Fig. 3b: eine Ansicht einer Kralle vor einer plastischen Verformung der Zinken.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung. In den verschiedenen Figuren der Zeichnung sind gleiche Teile stets mit denselben Bezugszeichen versehen.

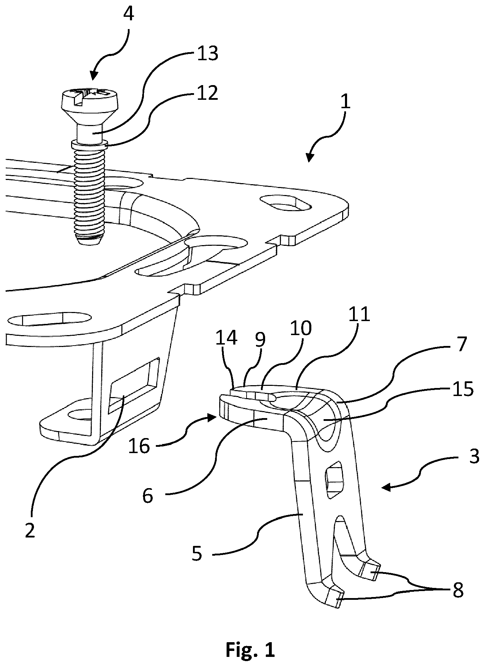

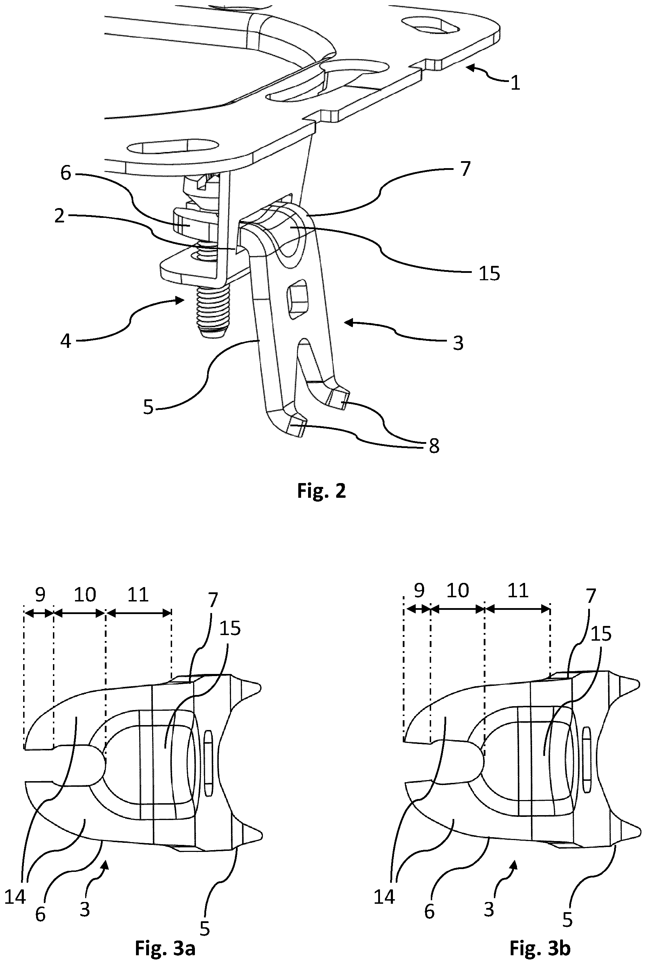

In Fig. 1 und Fig. 2 ist ein Teil eines Elektroinstallationsgerätes, wie Steckdose, Schalter, Taster oder ähnliches dargestellt. Dieses weist einen Tragring 1 auf. Am Tragring 1 befindet sich zumindest eine Aufnahme 2 zur Lagerung einer Kralle 3. Weiterhin weist die Aufnahme ein Gewinde für das Einschrauben einer Schraube 4 auf. Die Schraube 4 greift im zusammengesetzten Zustand in die Kralle 3 ein. Die Kralle 3 ist in der Aufnahme 2 beweglich gelagert und führt eine Schwenkbewegung in Richtung des äußeren Umfangs des Tragrings 1 aus. Die Kralle 3 kann hierbei über den äußeren Umfang des Tragrings 1 ausgeschwenkt werden. Somit kann durch das Eindrehen und Ausdrehen der Schraube 4 die Kralle 3 verstellt werden. Bevorzugt hat ein Tragring 1 zwei Aufnahmen 2, die sich einander gegenüberliegen und damit auch zwei Krallen 3, jeweils eine pro Aufnahme 2, mit jeweils zugehöriger Schraube 4 pro Kralle 3.

Die Schraube 4 ist insbesondere als eine Stellschraube ausgebildet und weist erfindungsgemäß zwischen einem Schraubenkopf und einem Gewinde einen Vorsprung 12 auf. Dieser Vorsprung 12 ist bevorzugt am oberen Ende des Gewindes angebracht und erstreckt sich zumindest teilweise, bevorzugt vollständig um den ganzen Umfang der Schraube 4. Zwischen dem Schraubenkopf und dem Vorsprung 12 ist erfindungsgemäß ein Einsteckbereich 13 zur Lagerung der Kralle 3 ausgebildet. Dieser Einsteckbereich 13 ist insbesondere gewindefrei und hat bevorzugt einen Durchmesser, der kleiner oder gleich dem Durchmesser des Gewindes ist.

Die Kralle 3 weist eine L-förmige Ausgestaltung mit zwei über einen Knickbereich 7 verbundenen Schenkeln 5, 6 auf, wobei am freien Ende eines ersten Schenkels 5 mindestens eine Spitze 8 ausgebildet ist. Die Spitze 8 greift bei Ausschwenkung in eine Fassung für ein Elektroinstallationsgerät ein und fixiert den Tragring 1 in der Position zur Fassung. Die Fassung kann z. B. als Unterputzdose in einer Wand ausgeführt sein. Zur Erhöhung der Stabilität sind bevorzugt an einer Kralle 3 zwei Spitzen 8, die seitlich zueinander angeordnet sind. Da jedoch der Tragring 1 im allgemeinen zwei Krallen 3 aufweist, ist es auch möglich, Krallen zu verwenden, die nur eine Spitze haben.

Der zweite Schenkel 6 ist in vom Knickbereich 7 abgewandter Richtung bis zu einem freien Ende des zweiten Schenkels 6 ausgebildet. Bevorzugt ist der erste Schenkel 5 mit der Spitze 8 etwas länger als der zweite Schenkel 6. Damit kann mit einer geringeren Bewegung der Schraube 4 eine größere Auslenkung der Kralle 3 erfolgen.

Das Ende des zweiten Schenkels 6 ist gabelförmig, mit zwei voneinander beabstandeten Zinken 14 ausgebildet. Zwischen den Zinken 14 verläuft ein Spalt. Am freien Ende des zweiten Schenkels 6 weist der Spalt erfindungsgemäß eine Breite kleiner als der Durchmesser des Einsteckbereichs 13 der Schraube 4 auf. Diese Breite ist ein erster Abschnitt 9 des zweiten Schenkels 6. An den ersten Abschnitt 9 schließt sich ein zweiter Abschnitt 10 in Richtung des Knickbereichs 7 an. Der Spalt erweitert sich in dem zweiten Abschnitt 10, wobei der Spalt größer oder gleich dem Durchmesser des Einsteckbereichs 13 der Schraube 4 und erfindungsgemäß kleiner als der Durchmesser des Vorsprungs 12 der Schraube 4 und kleiner als der Durchmesser des Schraubenkopfes ist. In dem zweiten Abschnitt 10 ist der Einsteckbereich 13 der Schraube 4 angeordnet.

Der zweite Abschnitt 10 ist erfindungsgemäß mit dem Knickbereich 7 über einen Stützabschnitt 11 verbunden. Der Spalt endet im zweiten Abschnitt 10. Dieser vollflächige Stützabschnitt 11 des zweiten Schenkels 6 ist aus Vollmaterial. Aus diesem Vollmaterial gehen die Zinken 14 und der zwischen den Zinken 14 liegende Spalt des zweiten Abschnitts 10 ab. Das hat den Vorteil, dass der Stützabschnitt 11 aus Vollmaterial eine Grundstabilität im Knickbereich 7 und an dem angrenzenden Abschnitt 10 bewirkt.

Erfindungsgemäß ist das Material der Kralle 3 plastisch verformbar. Das Material bewirkt eine stabilere Umformung. Der Knickbereich 7 ist stabiler und federt nicht nach. Beim Anziehen der Schraube 4 reagiert die Kralle 3 und gibt damit sofort eine Rückmeldung, mit welcher Kraft angezogen wurde. Bei federelastischem Material biegt sich dieses beim Anziehen durch, wodurch die Rückmeldung der Anzugskraft nicht direkt kommt, sondern erst nach Überspannen des federelastischen Materials. Das erhöht das Risiko, dass ein Materialbruch aufgrund des Überspannens möglich ist. Weiterhin bewirkt das plastisch verformbare Material, dass bei Bewegung der Schraube 4 sich der Spalt im ersten Abschnitt 9 nicht öffnet. Damit kommt es nicht zu einem Herausrutschen der Kralle 3 aus dem Einsteckbereich 13 der Schraube 4. Damit ist das Blockieren der Schraube 4 reduziert.

Bevorzugt weist der Knickbereich 7 eine die beiden Schenkel 5, 6 verbindende Einprägung 15 in Form eines plastisch deformierten Materialbereichs auf. Die Deformation des Materialbereichs kann durch Druckbelastung des Materials erfolgen. Hierbei wird das Material gegengelagert, wobei bevorzugt im Bereich der Deformation keine Gegenlagerung erfolgt, damit der Bereich sich in die Druckrichtung verformen kann. Das dient der Stabilisierung des Knickbereiches 7, da die durch die Deformation des Materialbereichs gebildete Kante höhere Kräfte aufnehmen kann. Die Deformation wird durch das plastisch verformbare Material begünstigt. Bei federndem Material wären höhere Kräfte notwendig, womit federndes Material dafür nicht geeignet ist.

In einer vorteilhaften Ausführungsform der Erfindung erstreckt sich die Einprägung 15 in den ersten Schenkel 5 in Richtung der Spitze 8. Diese Einprägung 15 stabilisiert ebenfalls die Kralle 3 in Richtung der Spitze 8, so dass die Hebelkraft besser auf die Spitze 8 übertragen werden kann.

Vorteilhafterweise erstreckt sich die Einprägung 15 bis in den Stützbereich und/oder den zweiten Abschnitt 10 des zweiten Schenkels 6. Damit wird der zweite Abschnitt 10 des zweiten Schenkels 6 stabilisiert. Dieser Schenkel 6 weist den Eingriff des Schenkels 6 in den Einsteckbereich 13 der Schraube 4 auf. Die Schraube 4 ist damit für die Stellung der Kralle 3 ursächlich. Indem die Deformation des Materialbereichs bis in den zweiten Abschnitt 10 reicht, können die durch die Schraube 4 auf die Kralle 3 übertragenen Kräfte besser auf die Spitze 8 geleitet werden, die dann die Verankerung des Elektroinstallationsgerät in der Einbaudose z.B. in einer Unterputzdose vornimmt.

Die Zinken 14 weisen insbesondere im ersten Abschnitt 10 auf der voneinander abgewandten Seite eine abgerundete Kontur 16 auf. Zur Erleichterung der plastischen Verformung und zur Verbesserung der Arbeitssicherheit wird eine abgerundete äußere Kontur 16 der Zinken 14 gewählt.

In einer vorteilhaften Ausführungsform der Erfindung liegt der Abstand der Zinken 14 in dem ersten Abschnitt 9 zum Abstand der Zinken 14 im zweiten Abschnitt 10 in einem Bereich von 50 bis 80%, bevorzugt von 60 bis 70%. Damit ist sichergestellt, dass die Kralle 3 im Einsteckbereich 13 der Schraube 4 verbleibt. Der erste Abschnitt 9 ist so weit verformt, dass der Einsteckbereich 13 der Schraube 4 den ersten Abschnitt 9 nicht passieren kann, und dass es zu keiner durch die Schraube 4 bewirkten Rückverformung des ersten Abschnitts 9 kommt.

In einer vorteilhaften Ausführungsform der Erfindung ist die Länge des Stützabschnitts 11 größer oder gleich der Länge des zweiten Abschnitts 10 des Spalts. Damit kann die Kralle 3 mit einer höheren Kraft durch die Schraube 4 ausgelenkt werden, als wenn die Länge des Stützabschnitts 11 kleiner als der zweite Abschnitt 10 wäre.

In einer vorteilhaften Ausführungsform der Erfindung sind beide Schenkel 5, 6 der Kralle 3 in einem Winkel von 60 bis 160°, bevorzugt 80 bis 125° zueinander angeordnet. Damit ist ein verbesserter Einbau und Ausbau des Elektroinstallationsgerätes möglich. Bei Winkeln unter 90° ist die Kralle 3 durch das Ausdrehen der Schraube 4 so weit einziehbar, dass die Spitze 8 der Kralle 3 beim Einsetzen in die Fassung nicht heraussteht, was ein Vorteil bei passgenauen Fassungen darstellt. Bei Winkeln über 90° steht zwar die Spitze 8 heraus, jedoch ist mit weniger Umdrehungen der Schraube 4 die Kralle 3 schneller in der Fassung arretierbar. Das ist insbesondere vorteilhaft bei etwas größer ausgebildeten Fassungen.

Das erfindungsgemäße Elektroinstallationsgerät wird mittels folgender Schritte hergestellt:
Zunächst erfolgt eine Bereitstellung eines Tragrings 1 mit einer Aufnahme 2 zur Lagerung einer Kralle 3 mittels einer Schraube 4.

Zudem erfolgt eine Bereitstellung einer Kralle 3, wobei die Kralle 3 eine L-förmige Ausgestaltung mit zwei über einen Knickbereich 7 verbundenen Schenkeln 5, 6 aufweist, und am freien Ende eines ersten Schenkels 5 mindestens eine Spitze 8 ausgebildet ist, und der zweite Schenkel 6 in vom Knickbereich 7 abgewandter Richtung bis zu einem freien Ende des zweiten Schenkels 6 gabelförmig mit zwei beabstandeten Zinken 14 ausgebildet ist, wobei ein zwischen den Zinken 14 verlaufender Spalt derart ausgebildet ist, dass am freien Ende des zweiten Schenkels 6 ein erster Abschnitt 9 ausgebildet ist, dessen Breite größer als der Durchmesser des Einsteckbereichs 13 der Schraube 4 ist, und sich in einem in Richtung des Knickbereichs 7 an den ersten Abschnitt 9 anschließenden zweiten Abschnitt 10 der Spalt erweitert und größer oder gleich dem Durchmesser des Einsteckbereichs 13 der Schraube 4 und kleiner als der Durchmesser des Vorsprungs 12 der Schraube 4 und kleiner als der Durchmesser des Schraubenkopfes ist. Weiterhin ist das Material der Kralle 3 plastisch verformbar. Diese Ausgestaltung der Kralle 3 erlaubt ein Einführen der Schraube 4 ohne eine elastische Verformung der Zinken 14.

Anschließend erfolgt eine Bereitstellung der Schraube 4, wobei die Schraube 4 zwischen einem Schraubenkopf und einem Gewinde einen Vorsprung 12 aufweist, wobei zwischen Schraubenkopf und Vorsprung 12 ein Einsteckbereich 13 zur Lagerung der Kralle 3 ausgebildet ist, mit nachfolgendem Eindrehen der Schraube 4 in ein Gewinde in der Aufnahme 2 des Tragrings 1.

Daran anschließend erfolgt ein Einstecken des zweiten Schenkels 6 der Kralle 3 in die Aufnahme 2 des Tragrings 1 und auf den Einsteckbereich 13 der Schraube 4, wobei der Einsteckbereich 13 durch den ersten Abschnitt 9 des Spalts bis in den zweiten Abschnitt 10 des Spalts eingeführt wird, ohne die Zinken 14 elastisch verformen zu müssen.

Abschließend erfolgt eine plastische Verformung des ersten Abschnitts 9, so dass der Spalt des ersten Abschnitts 9 kleiner als der Durchmesser des Einsteckbereichs 13 der Schraube 4 ist.

Man hat damit die Möglichkeit, nach Einführung der Kralle 3 in die Aufnahme 2 des Tragrings 1 und Einstecken der Kralle 3 in den Einsteckbereich 13 der Schraube 4 die plastische Verformung des ersten Abschnitts 9 durchzuführen, so dass die Kralle 3 an der Schraube 4 fixiert ist und nicht mehr herausfallen kann. Anschließend kann die Kralle 3 mittels der Schraube 4 eingestellt werden.

In Fig. 2 ist das Elektroinstallationsgerät mit Tragring 1 und mit fertig montierter Kralle 3 in der Aufnahme 2 und Schraube 4 dargestellt. Der größere, erste Schenkel 5 mit Spitze 8 der Kralle 3 ist im Knickbereich 7 mit dem längeren, zweiten Schenkel 6 verbunden. Der zweite Schenkel 6 wird im Knickbereich 7 und im Stützabschnitt 11 mit einer Einprägung 15 gegen Verformung stabilisiert.

In Fig. 3a und Fig. 3b ist jeweils die Kralle 3 alleine dargestellt. In Fig. 3a ist die Kralle 3 nach der plastischen Verformung der Zinken 14 dargestellt. Der erste Abschnitt 9 weist hier einen Spalt mit einem Abstand kleiner dem Durchmesser des Einsteckbereichs 13 der Schraube 4 auf. In Fig. 3b ist die Kralle 3 vor der plastischen Verformung der Zinken 14 gezeigt. Hierbei weist der erste Abschnitt 9 einen Spalt mit einem Abstand größer oder gleich dem Durchmesser des Einsteckbereichs 13 der Schraube 4 auf. Insbesondere ist in Fig. 3a und Fig. 3b die Aufteilung des zweiten Schenkels 6 der Kralle 3 in den Stützbereich 11, den anschließenden zweiten Abschnitt 10 und den abschließenden ersten Abschnitt 9 dargestellt. Die Einprägung 15 erstreckt sich vorzugsweise vom Knickbereich 7 in den Stützabschnitt 11 und insbesondere bis zum zweiten Abschnitt 10.

### Bezugszeichenliste

- 1: Tragring
- 2: Aufnahme
- 3: Kralle
- 4: Schraube
- 5: Erster Schenkel
- 6: Zweiter Schenkel
- 7: Knickbereich
- 8: Spitze
- 9: Erster Abschnitt
- 10: Zweiter Abschnitt
- 11: Stützabschnitt
- 12: Vorsprung
- 13: Einsteckbereich
- 14: Zinken
- 15: Einprägung
- 16: Kontur

## Patentansprüche

1. Elektroinstallationsgerät, wie Steckdose, Schalter, Taster, mit einem Tragring (1), der zumindest eine Aufnahme (2) zur Lagerung einer Kralle (3) mittels einer Schraube (4) aufweist, wobei die Schraube (4) einen Schraubenkopf und ein Gewinde aufweist und ein Einsteckbereich (13) zur Lagerung der Kralle (3) ausgebildet ist, wobei die Kralle (3) eine L-förmige Ausgestaltung mit zwei über einen Knickbereich (7) verbundenen Schenkeln (5, 6) aufweist, und am freien Ende eines ersten Schenkels (5) mindestens eine Spitze (8) ausgebildet ist, und der zweite Schenkel (6) in vom Knickbereich (7) abgewandter Richtung bis zu einem freien Ende des zweiten Schenkels (6) gabelförmig mit zwei beabstandeten Zinken (14) ausgebildet ist, wobei ein zwischen den Zinken (14) verlaufender Spalt derart ausgebildet ist, dass am freien Ende des zweiten Schenkels (6) ein erster Abschnitt (9) ausgebildet ist und sich in einem in Richtung des Knickbereichs (7) an den ersten Abschnitt (9) anschließenden zweiten Abschnitt (10) der Spalt erweitert und größer oder gleich dem Durchmesser des Einsteckbereichs (13) der Schraube (4) und kleiner als der Durchmesser des Schraubenkopfes ist, wobei in dem zweiten Abschnitt (10) der Einsteckbereich (13) der Schraube (4) angeordnet ist,
**dadurch gekennzeichnet, dass**
die Schraube (4) zwischen dem Schraubenkopf und dem Gewinde einen Vorsprung (12) aufweist, wobei zwischen Schraubenkopf und Vorsprung (12) der Einsteckbereich (13) zur Lagerung der Kralle (3) ausgebildet ist, wobei die Breite des ersten Abschnitts (9) des Spalts kleiner als der Durchmesser des Einsteckbereichs (13) der Schraube (4) ist und der Spalt in dem zweiten Abschnitt (10) kleiner als der Durchmesser des Vorsprungs (12) der Schraube (4) ist und in Richtung des Knickbereichs (7) an den zweiten Abschnitt (10) des Spalts anschließend ein vollflächiger Stützabschnitt (11) des zweiten Schenkels (6) aus Vollmaterial angeordnet ist, der den zweiten Abschnitt (10) des Spalts mit dem Knickbereich (7) verbindet, wobei das Material der Kralle (3) plastisch verformbar ist.

2. Elektroinstallationsgerät nach Anspruch 1,
**dadurch gekennzeichnet, dass**
der Knickbereich (7) eine die beiden Schenkel (5, 6) verbindende Einprägung (15) in Form eines plastisch deformierten Materialbereichs aufweist.

3. Elektroinstallationsgerät nach Anspruch 2,
**dadurch gekennzeichnet, dass**
sich die Einprägung (15) in den ersten Schenkel (5) in Richtung der Spitze (8) erstreckt.

4. Elektroinstallationsgerät nach Anspruch 2 oder 3,
**dadurch gekennzeichnet, dass**
sich die Einprägung (15) bis in den Stützbereich (11) und/oder den zweiten Abschnitt (9) des zweiten Schenkels (6) erstreckt.

5. Elektroinstallationsgerät nach einem der Ansprüche 1 bis 4, **dadurch gekennzeichnet, dass**
das der Abstand der Zinken (14) in dem ersten Abschnitt (9) zum Abstand der Zinken (14) im zweiten Abschnitt (10) in einem Bereich von 50 bis 80%, bevorzugt 60 bis 70% liegt.

6. Elektroinstallationsgerät nach einem der Ansprüche 1 bis 5, **dadurch gekennzeichnet, dass**
die Länge des Stützabschnitts (11) größer oder gleich der Länge des zweiten Abschnitts (10) des Spalts ist.

7. Elektroinstallationsgerät nach einem der Ansprüche 1 bis 6,
**dadurch gekennzeichnet, dass**
beide Schenkel (5, 6) der Kralle (3) in einem Winkel von 60 bis 160°, bevorzugt 80 bis 125° zueinander angeordnet sind.

8. Verfahren zur Herstellung eines Elektroinstallationsgerät nach einem der Ansprüche 1 bis 7,
**gekennzeichnet, durch**
a) Bereitstellung eines Tragrings (1) mit einer Aufnahme (2) zur Lagerung einer Kralle (3) mittels einer Schraube (4),
b) Bereitstellung der Kralle (3), wobei die Kralle (3) eine L-förmige Ausgestaltung mit zwei über einen Knickbereich (7) verbundenen Schenkeln (5, 6) aufweist, und am freien Ende eines ersten Schenkels (5) mindestens eine Spitze (8) ausgebildet ist, und der zweite Schenkel (6) in vom Knickbereich (7) abgewandter Richtung bis zu einem freien Ende des zweiten Schenkels (6) gabelförmig mit zwei beabstandeten Zinken (14) ausgebildet ist, wobei ein zwischen den Zinken (14) verlaufender Spalt derart ausgebildet ist, dass am freien Ende des zweiten Schenkels (6) ein erster Abschnitt (9) ausgebildet ist, dessen Breite größer als der Durchmesser des Einsteckbereichs (13) der Schraube (4) ist, und sich in einem in Richtung des Knickbereichs (7) an den ersten Abschnitt (9) anschließenden zweiten Abschnitt (10) der Spalt erweitert und größer oder gleich dem Durchmesser des Einsteckbereichs (13) der Schraube (4) und kleiner als der Durchmesser des Vorsprungs der Schraube (4) und kleiner als der Durchmesser des Schraubenkopfes ist, wobei das Material der Kralle (3) plastisch verformbar ist,
c) Bereitstellung der Schraube (4), wobei die Schraube (4) zwischen einem Schraubenkopf und einem Gewinde einen Vorsprung (12) aufweist, wobei zwischen Schraubenkopf und Vorsprung (12) ein Einsteckbereich (13) zur Lagerung der Kralle (3) ausgebildet ist,
d) Eindrehen der Schraube (4) in ein Gewinde in der Aufnahme (2) des Tragrings (1),
e) Einstecken des zweiten Schenkels (6) der Kralle (3) in die Aufnahme (2) des Tragrings (1) und auf den Einsteckbereich (13) der Schraube (4), wobei der Einsteckbereich (13) durch den ersten Abschnitt (9) des Spalts bis in den zweiten Abschnitt (10) des Spalts eingeführt wird,
f) plastische Verformung des ersten Abschnitts (9), so dass der Spalt des ersten Abschnitts (9) kleiner als der Durchmesser des Einsteckbereichs (13) der Schraube (4) ist.

## Claims

1. Electrical installation apparatus, such as a plug socket, switch, pushbutton switch, having a carrier ring (1) which has at least one receptacle (2) for mounting a claw (3) by means of a screw (4), wherein the screw (4) has a screw head and a thread, and a plug-in region (13) for mounting the claw (3) is formed, wherein the claw (3) has an L-shaped configuration with two legs (5, 6) connected via a bend region (7), and at least one tip (8) is formed on the free end of a first leg (5), and the second leg (6), in a direction pointing away from the bend region (7) into a free end of the second leg (6), has a fork-shaped form with two spaced-apart prongs (14), wherein a gap running between the prongs (14) is formed in such a way that a first portion (9) is formed on the free end of the second leg (6) and the gap widens in a second portion (10) adjoining the first portion (9) in the direction of the bend region (7) and is larger than or equal to the diameter of the plug-in region (13) of the screw (4) and smaller than the diameter of the screw head, wherein the plug-in region (13) of the screw (4) is arranged in the second portion (10),
**characterized in that**
the screw (4) has a projection (12) between the screw head and the thread, wherein the plug-in region (13) for mounting the claw (3) is formed between the screw head and the projection (12), wherein the width of the first portion (9) of the gap is smaller than the diameter of the plug-in region (13) of the screw (4) and the gap in the second portion (10) is smaller than the diameter of the projection (12) of the screw (4), and arranged in the direction of the bend region (7) and in a manner adjoining the second portion (10) of the gap is a full-area support portion (11) of the second leg (6) that is made from solid material and connects the second portion (10) of the gap to the bend region (7), wherein the material of the claw (3) is plastically deformable.

2. Electrical installation apparatus according to Claim 1,
**characterized in that**
the bend region (7) has a stamped indentation (15) which connects the two legs (5, 6) and is in the form of a plastically deformed material region.

3. Electrical installation apparatus according to Claim 2,
**characterized in that**
the stamped indentation (15) extends in the first leg (5) in the direction of the tip (8).

4. Electrical installation apparatus according to Claim 2 or 3,
**characterized in that**
the stamped indentation (15) extends as far as the support region (11) and/or the second portion (9) of the second leg (6).

5. Electrical installation apparatus according to one of Claims 1 to 4,
**characterized in that**
the spacing of the prongs (14) in the first portion (9) with respect to the spacing of the prongs (14) in the second portion (10) is in a range of from 50 to 80%, preferably 60 to 70%.

6. Electrical installation apparatus according to one of Claims 1 to 5,
**characterized in that**
the length of the support portion (11) is greater than or equal to the length of the second portion (10) of the gap.

7. Electrical installation apparatus according to one of Claims 1 to 6,
**characterized in that**
the two legs (5, 6) of the claw (3) are arranged at an angle of 60 to 160°, preferably 80 to 125°, with respect to one another.

8. Method for producing an electrical installation apparatus according to one of Claims 1 to 7, **characterized by**
a) providing a carrier ring (1) which has a receptacle (2) for mounting a claw (3) by means of a screw (4),
b) providing the claw (3), wherein the claw (3) has an L-shaped configuration with two legs (5, 6) connected via a bend region (7), and at least one tip (8) is formed on the free end of a first leg (5), and the second leg (6), in a direction pointing away from the bend region (7) into a free end of the second leg (6), has a fork-shaped form with two spaced-apart prongs (14), wherein a gap running between the prongs (14) is formed in such a way that a first portion (9) is formed on the free end of the second leg (6) the width of which is greater than the diameter of the plug-in region (13) of the screw (4), and the gap widens in a second portion (10) adjoining the first portion (9) in the direction of the bend region (7) and is larger than or equal to the diameter of the plug-in region (13) of the screw (4) and smaller than the diameter of the projection of the screw (4) and smaller than the diameter of the screw head, wherein the material of the claw (3) is plastically deformable,
c) providing the screw (4), wherein the screw (4) has a projection (12) between a screw head and a thread, wherein a plug-in region (13) for mounting the claw (3) is formed between the screw head and the projection (12),
d) screwing the screw (4) into a thread in the receptacle (2) of the carrier ring (1),
e) plugging the second leg (6) of the claw (3) into the receptacle (2) of the carrier ring (1) and onto the plug-in region (13) of the screw (4), wherein the plug-in region (13) is introduced through the first portion (9) of the gap into the second portion (10) of the gap,
f) plastically deforming the first portion (9) such that the gap of the first portion (9) is smaller than the diameter of the plug-in region (13) of the screw (4).

## Revendications

1. Dispositif d'installation électrique, tel qu'une prise, un commutateur, un bouton-poussoir, comprenant un anneau de retenue (1) qui présente au moins un logement (2) pour recevoir une griffe (3) au moyen d'une vis (4), la vis (4) présentant une tête de vis et un filet, et une zone d'insertion (13) est réalisée pour recevoir la griffe (3), dans lequel la griffe (3) présente une configuration en forme de L dotée de deux branches (5, 6) reliées par une zone coudée (7), et au moins une pointe (8) est réalisée à l'extrémité libre d'une première branche (5), et la deuxième branche (6) est réalisée en forme de fourche avec deux dents espacées (14) dans la direction détournée de la zone coudée (7) jusqu'à une extrémité libre de la deuxième branche (6), dans lequel un écartement s'étendant entre les dents (14) est réalisé de telle sorte qu'une première partie (9) est réalisée à l'extrémité libre de la deuxième branche (6), et dans une deuxième partie (10) suivant la première partie (9) en direction de la zone coudée (7), l'écartement s'élargit et est supérieur ou égal au diamètre de la zone d'insertion (13) de la vis (4) et inférieur au diamètre de la tête de vis, la zone d'insertion (13) de la vis (4) étant disposée dans la deuxième partie (10),
**caractérisé en ce que** la vis (4) présente un épaulement (12) entre la tête de vis et le filet, la zone d'insertion (13) étant réalisée entre la tête de vis et l'épaulement (12) pour recevoir la griffe (3), dans lequel la largeur de la première partie (9) de l'écartement est inférieure au diamètre de la zone d'insertion (13) de la vis (4), et dans la deuxième partie (10), l'écartement est inférieur au diamètre de l'épaulement (12) de la vis (4), et en direction de la zone coudée (7), suite à la deuxième partie (10) de l'écartement, est disposée une partie d'appui (11) sur toute la surface de la deuxième branche (6), en matériau plein, qui relie la deuxième partie (10) de l'écartement à la zone coudée (7), le matériau de la griffe (3) étant plastiquement déformable.

2. Dispositif d'installation électrique selon la revendication 1, **caractérisé en ce que** la zone coudée (7) présente une empreinte (15) sous la forme d'une zone de matière plastiquement déformée qui relie les deux branches (5, 6).

3. Dispositif d'installation électrique selon la revendication 2, **caractérisé en ce que** l'empreinte (15) s'étend dans la première branche (5) en direction de la pointe (8).

4. Dispositif d'installation électrique selon la revendication 2 ou 3, **caractérisé en ce que** l'empreinte (15) s'étend jusque dans la zone d'appui (11) et/ou la deuxième partie (9) de la deuxième branche (6).

5. Dispositif d'installation électrique selon l'une quelconque des revendications 1 à 4, **caractérisé en ce que** l'espacement des dents (14) dans la première partie (9) par rapport à l'espacement des dents (14) dans la deuxième partie (10) se situe dans une plage de 50 à 80 %, de préférence de 60 à 70 %.

6. Dispositif d'installation électrique selon l'une quelconque des revendications 1 à 5, **caractérisé en ce que** la longueur de la partie d'appui (11) est supérieure ou égale à la longueur de la deuxième partie (10) de l'écartement.

7. Dispositif d'installation électrique selon l'une quelconque des revendications 1 à 6, **caractérisé en ce que** les deux branches (5, 6) de la griffe (3) sont disposées l'une par rapport à l'autre selon un angle de 60 à 160°, de préférence de 80 à 125°.

8. Procédé de fabrication d'un dispositif d'installation électrique selon l'une quelconque des revendications 1 à 7, **caractérisé par** les étapes consistant à
a) fournir un anneau de retenue (1) doté d'un logement (2) pour recevoir une griffe (3) au moyen d'une vis (4),
b) fournir la griffe (3), la griffe (3) présentant une configuration en forme de L avec deux branches (5, 6) reliées par une zone coudée (7), et au moins une pointe (8) est réalisée à l'extrémité libre d'une première branche (5), et la deuxième branche (6) est réalisée en forme de fourche avec deux dents espacées (14) dans la direction détournée de la zone coudée (7) jusqu'à une extrémité libre de la deuxième branche (6), dans lequel un écartement s'étendant entre les dents (14) est réalisé de telle sorte qu'à l'extrémité libre de la deuxième branche (6), une première partie (9) est réalisée dont la largeur est supérieure au diamètre de la zone d'insertion (13) de la vis (4), et dans une deuxième partie (10) suivant la première partie (9) en direction de la zone coudée (7), l'écartement s'élargit et est supérieur ou égal au diamètre de la zone d'insertion (13) de la vis (4) et inférieur au diamètre de l'épaulement de la vis (4) et inférieur au diamètre de la tête de vis, le matériau de la griffe (3) étant plastiquement déformable,
c) fournir la vis (4), la vis (4) présentant un épaulement (12) entre la tête de vis et le filet, la zone d'insertion (13) pour recevoir la griffe (3) étant réalisée entre la tête de vis et l'épaulement (12),
d) visser la vis (4) dans un filet dans le logement (2) de l'anneau de retenue (1),
e) insérer la deuxième branche (6) de la griffe (3) dans le logement (2) de l'anneau de retenue (1) et sur la zone d'insertion (13) de la vis (4), la zone d'insertion (13) étant introduite à travers la première partie (9) de l'écartement jusque dans la deuxième partie (10) de l'écartement,
f) déformer plastiquement la première partie (9) de sorte que l'écartement de la première partie (9) est inférieur au diamètre de la zone d'insertion (13) de la vis (4).
